# EUROPÄISCHE PATENTANMELDUNG

(11) **EP 3 561 820 A2**
(43) Veröffentlichungstag der Anmeldung: **30.10.2019**
(21) Anmeldenummer: 19166554.6
(22) Anmeldetag: 01.04.2019
(51) Int. Cl.: H01F 7/16, H01F 7/08, F16K 31/06, F16K 31/08, G01F 1/66, B33Y 80/00

(54) **MONOSTABILES ELEKTROMAGNETISCHES HYDRAULIKVENTIL SOWIE HERSTELLUNGSVERFAHREN HIERFÜR**

(30) Priorität: 23.04.2018 DE 102018109640
(71) Anmelder: Tries GmbH & CO. KG, 89584 Ehingen (DE)
(72) Erfinder: Tries, Matthias, 89584 Ehingen (DE); Herzog, Robert, 89641 Öpfingen (DE); Neubauer, Felix, 89584 Ehingen (DE)
(74) Vertreter: Otten, Roth, Dobler & Partner mbB Patentanwälte

(57) **Zusammenfassung**

Monostabiles elektromagnetisches Hydraulikventil (1), insbesondere für einen Druckbereich von 100 bar bis 1000 bar, mit reduziertem Bauraum, umfassend ein Gehäuse (2) mit einer Spule (4) zur Erzeugung eines Steuermagnetfelds zur Betätigung des Ventils (1), wobei das Gehäuse (2) um die Spulenachse (A) einen Gehäusemantel (3) aufweist, einen Anker (7) mit einem Kolben, der ein magnetisierbares Material bzw. einen Permanentmagneten umfasst, wobei der Anker (7) im Inneren des Gehäusemantels (3) auf der Spulenachse (A) so gelagert ist, dass er zwischen wenigstens zwei Positionen verschiebbar ist und in wenigstens einer der Positionen, insbesondere in jeder der Positionen und Zwischenstellungen wenigstens teilweise ins Innere der Spule eingreift, wobei ein elastisches Element (8) gegenüber dem Anker so gelagert ist, dass er ohne Steuermagnetfeld in einer stabilen Position gehalten wird, wobei die Spule (4) vollständig in den Gehäusemantel (3) integriert und von diesem umschlossen ist.

## Beschreibung

Die Erfindung betrifft ein monostabiles elektromagnetisches Hydraulikventil, insbesondere für einen Druckbereich von 100 bar bis 1000 bar, sowie ein Herstellungsverfahren für ein solches Hydraulikventil.

Aus dem Stand der Technik sind zahlreiche Hydraulikventile bekannt; beispielsweise geht aus der WO 2015/140726 A1 ein bistabiles elektrisches Ventil für ein Fahrzeug hervor, welches sehr kompakt konstruiert ist.

Aufgabe der Erfindung ist es, ein monostabiles elektromagnetisches Hydraulikventil bereitstellen zu können, welches insbesondere für typische, im Hydraulikbereich übliche Drücke im Bereich von 100 bar bis 1000 bar anwendbar ist und welches einen verkleinerten Bauraum benötigt.

Die Aufgabe wird, ausgehend von einem monostabilen Hydraulikventil der eingangs genannten Art, durch die Merkmale des Anspruchs 1 sowie hinsichtlich seiner Herstellung durch die Merkmale des Anspruchs 9 gelöst.

Durch die in den abhängigen Ansprüchen genannten Maßnahmen sind vorteilhafte Ausführungen und Weiterbildungen der Erfindung möglich.

Ein erfindungsgemäßes Hydraulikventil ist als monostabiles elektromagnetisches Ventil ausgebildet. Das bedeutet, dass auch im stromlosen Zustand das Ventil einen stabilen Schaltungszustand einnimmt, in dem es geöffnet oder geschlossen ist. Hierzu umfasst das Ventil einen Anker mit einem Kolben, der ein magnetisierbares, insbesondere ferromagnetisches Material umfasst. Ein elastisches Element, wie zum Beispiel eine Feder, ist so gegenüber dem Anker gelagert, dass dieser durch die Federkraft in eine stabile Position gebracht und dort gehalten wird.

Grundsätzlich ist auch denkbar, dass der Kolben mit einem Permanentmagneten ausgestattet ist, der durch das Feld der Spule angezogen oder abgestoßen wird. Das Ventil weist zunächst ein Gehäuse mit einer Spule zum Erzeugen eines Steuermagnetfeldes auf, um den Kolben bzw. den Anker auch bewegen zu können. Um die Spulenachse herum ist Gehäusemantel angeordnet.

In dem Gehäuse bzw. im Inneren des Gehäusemantels ist der Anker auf der Spulenachse in der Weise gelagert, dass er zwischen wenigstens zwei Positionen verschiebbar ist und in wenigstens einer der Positionen, insbesondere in jeder der Positionen und Zwischenstellungen wenigstens teilweise ins Innere der Spule eingreift. Durch diese Maßnahme wird eine kompakte Bauform eines Ventils ermöglicht, da sich der für die Spule benötigte Bauraum und der für den Anker benötigte Bauraum überlappen. Um insbesondere die Zahl der Bauteile zu reduzieren und gegebenenfalls auch die Bauhöhe reduzieren zu können, ist die Spule vollständig in den Gehäusemantel integriert und wird von diesem umschlossen. Dies bedeutet, dass Spule und Gehäuse praktisch ein einziges Bauteil bilden können und die Spule auch hinsichtlich ihrer Position an genau vorgegebener Stelle platziert werden kann.

Vorzugsweise weist der Gehäusemantel eine Innenfläche auf, wobei die Innenfläche zugleich als Kontaktfläche zum Kontaktieren bzw. Berühren der Anker-Außenfläche und/oder wenigstens eines Dichtelementes des Ankers ausgebildet ist, so dass das Spulengehäuse zugleich als Kolbengehäuse des Kolbens ausgebildet ist. Diese Maßnahme reduziert den konstruktiven und fertigungstechnischen Aufwand, insbesondere bei einer Herstellung des Ventils mittels additiver Verfahren bzw. sog. 3D-Druckverfahren.

Vorteilhafterweise ist in radialer Richtung betrachtet die Spule wenigstens teilweise um den Anker und/oder Kolben herum angeordnet. Hiermit werden eine besonders Platz sparende Bauweise sowie eine elektromagnetisch vorteilhafte Anordnung der entsprechenden Komponenten realisierbar.

In einer bevorzugten Variante der Erfindung ist auf der Innenseite der Spule wenigstens eine Innenwand des Gehäusemantels vorgesehen, wobei wenigstens die Innenwand die als Kontaktfläche ausgebildete Innenfläche des Gehäusemantels umfasst. So wird eine hohe Integration der Spule innerhalb des Ventilgehäuses bzw. des Gehäusemantels verwirklicht, was wiederum bei einer Herstellung des Ventils mittels additiver Verfahren bzw. sog. 3D-Druckverfahren oder dergleichen von großem Vorteil ist.

An der Innenseite der Spule kann im Bereich des Gehäusemantels, insbesondere mittig gegenüber der Spulenachse eine Trennstelle aus einem nicht magnetisch leitfähigen Material (also mit geringer magnetischer Permeabilität) angeordnet sein, während der die Spule sonst umschließende Teil des Gehäusemantels aus einem magnetisch leitfähigen, insbesondere einem ferromagnetischen Material ausgebildet ist. Vorteilhafterweise besitzt dieses Gehäusematerial jedoch eine geringe Remanenz, damit im stromlosen Zustand das Gehäuse selbst keine bzw. nur eine geringe Magnetisierung behält und nicht die Position des Ankers / Kolbens beeinflusst. Gegebenenfalls kann die Trennstelle als Bestandteil des Gehäusemantels angesehen werden. Grundsätzlich konzentrieren sich die Feldlinien des Magnetfeldes vorzugsweise in einem magnetisch leitfähigen bzw. ferromagnetischen Material. Durch die Trennstelle können somit die Magnetfeldlinien stärker zur Spulenachse hin verlagert und dort konzentriert werden. Betrachtet man isoliert einen Ausschnitt der Spule entlang der Spulenachse, so bilden sich geschlossene Feldlinien aus, die in einem Abschnitt im Inneren der Spule im Wesentlichen in Richtung der Spulenachse (gegebenenfalls sogar parallel zur Spulenachse) verlaufen, dann außen die Spule umgeben und schließlich wieder im Inneren der Spule zusammenlaufen, sodass eine geschlossene Feldlinie ausgebildet ist.

Durch die Trennstelle können die im Inneren der Spule verlaufenden Magnetfeldlinien noch stärker konzentriert werden, da die Trennstelle zunächst eine Verzerrung und auch eine leichte Verschiebung des Zentrums einer geschlossenen Feldlinie in Richtung zur Spulenachse hin bewirken. Auf diese Weise kann bei dieser Ausführungsform der Erfindung die Umsetzung des elektrischen Signals, das an die Spule angelegt wird, in eine Kraftwirkung verbessert werden.

Der Anker wiederum kann bei einer vorteilhaften Ausführungsform der Erfindung als Ventilkolben zum Öffnen bzw. Verschließen des Ventils ausgebildet sein. Dies bedeutet, dass unmittelbar die auf den Anker wirkende Kraft das Öffnen und Schließen des Ventils ohne eine Zusatzmechanik oder ein zusätzliches Getriebe bewirkt. Somit kann wiederum in vorteilhafter Weise auch der benötigte Bauraum reduziert werden. Das Ventil ist hinsichtlich seines Aufbaues einfacher und daher gegebenenfalls auch weniger fehler- bzw. wartungsanfällig.

Bislang werden additive Fertigungsverfahren in der Regel allenfalls beim Bau von Modellen oder bei Anwendungen im Bereich der Mikroventiltechnik angewendet, wie beispielsweise 3-D-Druckverfahren. Allerdings können wesentliche strukturelle Teile des Hydraulikventils mit einem solchen additiven Fertigungsverfahren hergestellt werden, insbesondere das Gehäuse, der Anker bzw. Kolben und auch die Spule. Darüber hinaus ist es bei Anwendung eines additiven Fertigungsverfahrens grundsätzlich möglich, bereits vorgefertigte Bauteile zu verwenden und zu verbauen. Diese können gegebenenfalls vorpositioniert werden, sodass an diese Teile additiv entsprechendes Baumaterial angefügt wird.

Darüber hinaus bietet die Anwendung eines additiven Fertigungsverfahrens zahlreiche Vorteile: Zum einen können zum Beispiel beim Herstellen von Modellen und Prototypen sehr schnell voneinander abweichende Formen in einen Fertigungsprozess mit integriert werden. Eine individuelle Anpassung eines Ventils ist bei der Fertigung stets möglich. Zum Teil können auch wesentlich komplexere Strukturen realisiert werden, die in der Praxis aus einzelnen, zusammengesetzten Teilen nicht immer, zumindest nicht in kleiner Größe gebaut werden können. Auch Dichtigkeitsprobleme können reduziert werden: Das Gehäuse kann einteilig gefertigt bzw. gedruckt werden und somit vollständig abdichten. Darüber hinaus kann das Gehäuse so gefertigt werden, dass es in einen Ventilblock optimal integriert werden kann, z.B. kann ein Außengewinde am Gehäuse gedruckt oder nachträglich geschnitten sein, sodass es in den Ventilblock einschraubbar ist. Folglich kann das Gehäuse auch als geschlossenes Modul wie eine Patrone in den Ventilblock eingebaut werden.

Gerade dann, wenn bei einer Variante der Erfindung Gehäuse und Spule zusammen additiv gefertigt werden, stellt diese Maßnahme dahingehend einen besonderen Vorteil dar, dass diese bereits zum Zeitpunkt der Fertigung praktisch auch nur ein Bauteil zusammen ausbilden. Eine besonders kompakte Realisierung des Ventils wird somit auch hierdurch ermöglicht.

Um die Funktionalität des vorgeschlagenen Hydraulikventils zu erweitern, kann bei einem Ausführungsbeispiel der Erfindung ein Durchflussmesser, insbesondere ein Ultraschallsensor zusätzlich vorgesehen sein.

Ferner kann das Gehäuse bei einer vorteilhaften Weiterbildung der Erfindung insbesondere einteilig ausgebildet sein. Es ist denkbar, den Anker bzw. Kolben zunächst zu fertigen bzw. an einer vorgegebenen Stelle zu positionieren und das Gehäuse um den Anker rum additiv zu fertigen.

Zur Herstellung eines monostabilen elektromagnetischen Hydraulikventils gemäß der Erfindung, welches in einem Druckbereich von 100 bar bis 1000 bar arbeitet, werden zur Reduzierung des Bauraums folgende Verfahrensschritte vorgeschlagen:
Anwendung eines additiven Fertigungsschritts, insbesondere eines 3-D-Drucks eines Teils des Gehäuses.

Anschließend wird entweder eine vorgefertigte Spule in den Teil des Gehäuses, der bereits hergestellt ist, eingelegt, oder dort neu gewickelt oder sie wird mittels eines additiven Fertigungsverfahrens, insbesondere mittels eines 3-D Drucks hergestellt.

Das additive Fertigungsverfahren, insbesondere der 3D-Druck wird für die Herstellung des verbleibenden Teils des Gehäuses fortgesetzt. Die Spule wird dabei insbesondere mit dem verbleibenden Teil des Gehäuses bzw. des Gehäusemantels umschlossen, d.h. die Spule wird in das Gehäuse integriert.

Der Anker bzw. der Kolben kann entweder bei dem Herstellungsverfahren vorpositioniert werden, sodass das Gehäuse um den Anker herum gedruckt wird. Gleiches gilt für die Bereitstellung und Positionierung des elastischen Elementes. Es ist aber auch denkbar, dass ein Teil des Gehäuses additiv gefertigt bzw. gedruckt wird, und der Anker im Anschluss daran unmittelbar in das bereits fertige Gehäuseteil eingelegt wird. Auch das elastische Element kann sodann positioniert werden. Denkbar ist aber auch grundsätzlich, dass das gesamte Gehäuse additiv gefertigt wird, und Anker und elastisches Element nachträglich darin eingebracht werden. Das elastische Element wird dabei so positioniert, dass es den Anker auch im stromlosen Zustand in einer stabilen Position hält. Der Anker wiederum wird erfindungsgemäß im Inneren des Gehäusemantels auf der Spulenachse so gelagert, dass er zwischen wenigstens zwei Positionen verschiebbar ist und in wenigstens einer der Positionen, insbesondere in jeder der Positionen und Zwischenstellungen wenigstens teilweise ins Innere der Spule eingreift. Durch diese Maßnahme wird grundsätzlich nur ein kleiner kompakter Bauraum für das Ventil benötigt. Darüber hinaus können die Zahl der Bauteile und die Bauhöhe verringert werden kann. Sind mehrere Bauteile vorhanden, die insbesondere an den fluidleitenden Innenraum angrenzen, so muss grundsätzlich mehr Bauraum zur Verfügung gestellt werden, da diese Teile oftmals fest miteinander verbunden werden müssen, zum Beispiel verschraubt werden müssen und gegebenenfalls auch zusätzliche Dichtungsteile mit einzuplanen sind.

Additiv gefertigt werden können grundsätzlich sowohl Gehäuseteile bzw. das gesamte Gehäuse als auch der Anker mit dem Kolben. Auch die Spule kann additiv gefertigt werden. Gerade im Zusammenhang mit der Fertigung des Gehäuses bietet dies den Vorteil, dass auch die Spule in einem Fertigungsschritt des additiven Fertigungsverfahrens hergestellt bzw. mit gedruckt werden kann. Spule und Gehäuse können somit ohne Weiteres aufeinander angepasst werden.

Bei einem Fertigungsverfahren kann im Gehäusemantel auf der Innenseite der Spule, insbesondere mittig gegenüber der Spulenachse, eine Trennstelle aus nicht magnetisch leitfähigen Material eingebracht bzw. additiv gefertigt werden (zum Beispiel gedruckt werden). Der die Spule umschließenden Teil des Gehäusemantels besteht in der Regel aus einem magnetisch leitfähigen, insbesondere ferromagnetischen Material, sodass sich die Feldlinien stärker zur Spulenachse hin konzentrieren können. Die Feldlinien durchlaufen den magnetisch leitfähigen Teil des Gehäusemantels und konzentrieren sich zunächst in diesem Teil, umgehen jedoch im Wesentlich den Bereich, in dem sich die Trennstelle befindet. Insgesamt wird das erzeugte Feld verzerrt, kann jedoch mehr zur Spulenachse hin konzentriert werden.

Bei der besonders bevorzugten Weiterbildung der Erfindung ist das Gehäuse als einteiliges Bauteil gefertigt. Es werden also nicht nur insgesamt weniger Bauteile benötigt, sondern es muss auch weniger Abdichtmaterial und weniger Befestigungsmittel wie Schrauben verwendet werden. Dies ermöglicht wiederum auch, den Bauraum und die Bauhöhe verringern zu können.

### Ausführungsbeispiel

Ein Ausführungsbeispiel der Erfindung ist der Zeichnung dargestellt und wird nachstehend unter Angabe weiterer Einzelheiten und Vorteile näher erläutert. Im Einzelnen zeigt:

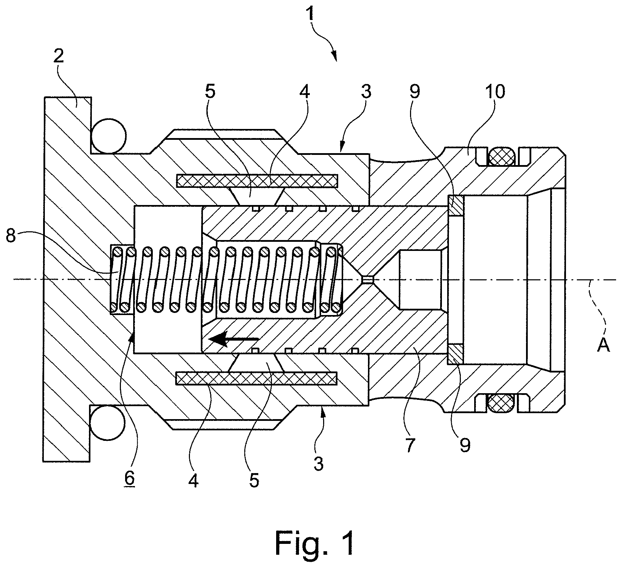

- Fig. 1:: einen schematischen Schnitt durch ein Hydraulikventil gemäß der Erfindung.

Figur 1 zeigt ein Hydraulikventil 1 in einer Schnittdarstellung entlang der Achse A. Das Ventil 1 umfasst zunächst ein Gehäuse 2 mit einem Gehäusemantel 3, in den wiederum eine Spule 4 integriert ist. Teile des Gehäusemantels 3 umgeben also die Wicklung der Spule 4, wobei auf der Innenseite der Spule 4 wiederum eine Trennstelle 5 angeordnet ist. Im Innenraum 6 des Gehäuses 2 ist ein Kolben 7 angeordnet, der gleichzeitig den Anker des elektromagnetischen Ventils 1 bildet. Der Anker 7 ist gegen eine Feder 8 gelagert, die ihn mit Druck beaufschlagt und den Anker 7 gegen einen Sicherungsring 9 drückt und somit das Herausfallen des Ankers 7 verhindert und seine Endposition definiert. Der Kolben 7 ist schieberdicht und dichtet somit durch sein Toleranzspiel zwischen Anker und Gehäuse 2.

Der Anker bzw. Kolben 7 besteht im Wesentlichen aus einem ferromagnetischen Material, das also magnetisierbar ausgebildet ist. Wird die Spule 4 bestromt, entsteht ein Magnetfeld. Ohne die Trennstelle 5 verlaufen die Feldlinien des erzeugten Magnetfeldes im Inneren der Spule 4 und umgeben dann die die Spulenwicklung, sodass sie an einer Seite aus dem inneren Bereich der Spule 4 austreten und auf der anderen Seite wieder in diesen Bereich eintreten. Im Falle einer langen Spule (ohne ein zusätzliches Material im Inneren) verlaufen die Feldlinien im Inneren nahezu parallel zur Spulenachse.

Die Feldlinien bilden somit geschlossene Linien, da es sich bei einem Magnetfeld um ein quellenfreies Feld handelt. Durch die Trennstelle 5 kann das Feld verzerrt und noch stärker in Richtung der Spulenachse A hin konzentriert werden. Im Anschlussbereich 10 des Gehäuses 2 kann ein Ultraschallsensor als Durchflussmesser integriert werden.

Alternativ zum Durchflussmesser kann auch der Druckunterschied/Druckabfall zwischen Ventil-Ein- und Ausgang bestimmt werden; ist ferner die Position des Ankers 7 zum Gehäuse 2 bekannt, kann aus diesen Informationen der Volumenstrom errechnet werden.

### Bezugszeichenliste

- 1: Hydraulikventil
- 2: Gehäuse
- 3: Gehäusemantel
- 4: Spule
- 5: Trennstelle
- 6: Gehäuse-Innenvolumen
- 7: Anker / Kolben
- 8: Feder
- 9: Sicherungsring
- 10: Anschlussteil mit Durchflussmesser

- A: Spulenachse

## Patentansprüche

1. Monostabiles elektromagnetisches Hydraulikventil (1), insbesondere für einen Druckbereich von 100 bar bis 1000 bar, umfassend:
- ein Gehäuse (2) mit einer Spule (4) zur Erzeugung eines Steuermagnetfelds zur Betätigung des Ventils (1), so dass das Gehäuse (2) als Spulengehäuse (2) ausgebildet ist,
- wobei das Gehäuse (2) um die Spulenachse (A) einen Gehäusemantel (3) aufweist,
- einen eine Anker-Außenfläche aufweisenden Anker (7) mit einem Kolben, der ein magnetisierbares, insbesondere ferromagnetisches Material und/oder einen Permanentmagneten umfasst,
- wobei der Anker (7) im Inneren des Gehäusemantels (3) auf der Spulenachse (A) so gelagert ist, dass er zwischen wenigstens zwei Positionen verschiebbar ist und in wenigstens einer der Positionen, insbesondere in jeder der Positionen und Zwischenstellungen wenigstens teilweise ins Innere der Spule eingreift,
- wobei der Gehäusemantel (3) eine Innenfläche aufweist und wobei die Innenfläche zugleich als Kontaktfläche zum Kontaktieren der Anker-Außenfläche und/oder wenigstens eines Dichtelementes des Ankers (7) ausgebildet ist, so dass das Spulengehäuse (2) zugleich als Kolbengehäuse (2) des Kolbens ausgebildet ist,
- wobei ein elastisches Element (8), insbesondere eine Feder, vorgesehen ist, gegenüber dem der Anker (7) so gelagert ist, dass er ohne Steuermagnetfeld in einer stabilen Position gehalten wird,
- wobei die Spule (4) vollständig in den Gehäusemantel (3) integriert und von diesem umschlossen ist.

2. Hydraulikventil (1) nach Anspruch 1, **dadurch gekennzeichnet, dass** in radialer Richtung betrachtet die Spule (4) wenigstens teilweise um den Anker (7) und/oder Kolben herum angeordnet ist.

3. Hydraulikventil (1) nach einem der vorgenannten Ansprüche, **dadurch gekennzeichnet, dass** auf der Innenseite der Spule (4) wenigstens eine Innenwand des Gehäusemantels (3) vorgesehen ist, wobei wenigstens die Innenwand die als Kontaktfläche ausgebildete Innenfläche des Gehäusemantels (3) umfasst.

4. Hydraulikventil (1) nach einem der vorgenannten Ansprüche, **dadurch gekennzeichnet, dass** im Gehäusemantel (3) auf der Innenseite der Spule (4), insbesondere mittig gegenüber der Spule (4) in Längsrichtung entlang der Spulenachse (A), eine Trennstelle (5) aus nicht magnetisch leitfähigen Material angeordnet ist, während der die Spule umschließende Teil des Gehäusemantels (3) wenigstens teilweise, insbesondere vollständig aus einem magnetisch leitfähigen, insbesondere einem ferromagnetischen Material, ausgebildet ist, um insbesondere die Magnetfeldlinien stärker zur Spulenachse hin zu konzentrieren.

5. Hydraulikventil (1) nach einem der vorgenannten Ansprüche, **dadurch gekennzeichnet, dass** der Anker (7) als Ventilkolben zum Öffnen und/oder Verschließen des Ventils ausgebildet ist.

6. Hydraulikventil (1) nach einem der vorgenannten Ansprüche, **dadurch gekennzeichnet, dass** das Gehäuse (2) und/oder der Anker (7), insbesondere der Kolben, und/oder die Spule (4) wenigstens teilweise, insbesondere vollständig durch ein additives Fertigungsverfahren, insbesondere durch 3D-Druck hergestellt ist/sind.

7. Hydraulikventil (1) nach einem der vorgenannten Ansprüche, **dadurch gekennzeichnet, dass** ein Durchflussmesser, insbesondere ein Ultraschallsensor zur Durchflussmessung vorgesehen ist.

8. Hydraulikventil (1) nach einem der vorgenannten Ansprüche, **dadurch gekennzeichnet, dass** das Gehäuse (2) einstückig ausgebildet ist.

9. Verfahren zur Herstellung eines monostabilen elektromagnetischen Hydraulikventils (1), insbesondere für einen Druckbereich von 100 bar bis 1000 bar, umfassend folgende Verfahrensschritte:
- additives Fertigen, insbesondere 3D-Drucken, eines Teils des Gehäuses (2, 3),
- Einlegen einer vorgefertigen Spule in den Teil des Gehäuses oder additives Fertigen oder Wickeln einer Spule (4) in den Teil des Gehäuses (2, 3),
- additives Fertigen, insbesondere 3D-Drucken, des restlichen Gehäuses (2, 3), insbesondere Umschließen der Spule (4) mit dem Gehäuse (2, 3), sodass die Spule (4) vollständig in den Gehäusemantel (3) integriert und von diesem umschlossen wird,
- Platzieren eines Anker (7) mit einem Kolben, der ein magnetisierbares, insbesondere ferromagnetisches Material umfasst, wobei der Anker im Inneren des Gehäusemantels auf der Spulenachse so gelagert wird, dass er zwischen wenigstens zwei Positionen verschiebbar ist und in wenigstens einer der Positionen, insbesondere in jeder der Positionen und Zwischenstellungen wenigstens teilweise ins Innere der Spule (4) eingreift,
- wobei ein elastisches Element(8), insbesondere eine Feder, gegenüber dem Anker (7) so positioniert wird, dass er ohne Steuermagnetfeld in einer stabilen Position gehalten wird.

10. Verfahren nach dem vorgenannten Anspruch, **dadurch gekennzeichnet, dass** der Anker (7) und/oder der Kolben mit einem additiven Fertigungsverfahren, insbesondere 3D-Druck wenigstens teilweise, insbesondere vollständig gefertigt wird.

11. Verfahren nach einem der vorgenannten Ansprüche, **dadurch gekennzeichnet, dass** im Gehäusemantel (3) auf der Innenseite der Spule (5), insbesondere mittig gegenüber der Spule (4)in Längsrichtung entlang der der Spulenachse (A), eine Trennstelle (5) aus nicht magnetisch leitfähigem Material eingebracht und/oder additiv gefertigt, insbesondere gedruckt wird, während der die Spule (4) umschließende Teil des Gehäusemantels (3) aus einem magnetisch leitfähigen, insbesondere einem ferromagnetischen Material gefertigt wird, um insbesondere die Magnetfeldlinien stärker zur Spulenachse (A) hin zu konzentrieren.

12. Verfahren nach einem der vorgenannten Ansprüche, **dadurch gekennzeichnet, dass** das Gehäuse (2) als einstückiges Bauteil gefertigt wird.
